# EUROPÄISCHE PATENTANMELDUNG

(11) **EP 1 167 841 A2**
(43) Veröffentlichungstag der Anmeldung: **02.01.2002**
(21) Anmeldenummer: 01114405.2
(22) Anmeldetag: 15.06.2001
(51) Int. Cl.: F16K 1/52

(54) **Einbauventil**

(30) Priorität: 23.06.2000 DE 10030699
(71) Anmelder: F.W. Oventrop GmbH. & Co. KG., 59939 Olsberg (DE)
(72) Erfinder: Foitzik, Roland, Dr., 59939 Olsberg (DE); Löffler, Gerhard, 59939 Olsberg (DE)
(74) Vertreter: Köchling, Conrad-Joachim

(57) **Zusammenfassung**

Um ein voreinstellbares Einbauventil (1), insbesondere für Warmwasserheizkörper, mit einem Gehäuse (2), mit einem Teil, insbesondere einer Ventilstange (9), zur Halterung eines mit einem Ventilsitz (8) zusammenwirkenden Ventilverschlußstücks, das in Öffnungsrichtung durch eine Rückstellfederanordnung federbelastet ist, mit einer Vorrichtung zum Voreinstellen der Durchflußmenge, zu schaffen, welches eine hohe Funktionssicherheit aufweist und hinsichtlich der Herstellung vereinfacht ist, wird vorgeschlagen, daß die Vorrichtung zum Voreinstellen der Durchflußmenge im wesentlichen zwei Teile umfaßt, nämlich ein drehbar und axial verschiebliches Stellteil (3), das integral mit dem das Ventilverschlußstück halternden Teil (9) ausgebildet ist, und ein Regelteil (14), das mit dem Stellteil (3) gekoppelt ist, so dass es der Drehbewegung des Stellteils (3) folgt, jedoch das Stellteil (3) unabhängig vom Regelteil (14) zu diesem hin und von diesem weg axial verschiebbar ist.

## Beschreibung

Die Erfindung betrifft ein voreinstellbares Einbauventil, insbesondere für Warmwasserheizkörper, mit einem Gehäuse, mit einem Teil, insbesondere einer Ventilstange, zur Halterung eines mit einem Ventilsitz zusammenwirkenden Ventilverschlußstücks, mit einer Vorrichtung zum Voreinstellen der Durchflußmenge.

Derartige Einbauventile sind im Stand der Technik vielfach bekannt. Ein gattungsgemäßes Einbauventil ist beispielsweise aus der DE 44 07 447 C2 bekannt. Desweiteren wird zum Stand der Technik auf die DE 43 25 738 C2, die DE 44 42 744 A1 sowie die DE 195 45 715 A1 verwiesen. Solche voreinstellbaren Einbauventile, die in ein Ventilgehäuse montiert werden, sind sowohl für konventionelle Ventile als auch für in Plattenheizkörper integrierte Ventilgarnituren bekannt und geeignet.

Allen zum Stand der Technik gehörenden Einbauventilen ist gemeinsam, daß sie als separate Bauteile einen Voreinstellmechanismus und eine Ventilstange aufweisen, die über eine Betätigungsvorrichtung, beispielsweise einen Thermostaten oder auch über einen Stellantrieb, eine Hubbewegung ausführt.

Hierbei ist nachteilig, daß von der strömungsbeaufschlagten Seite zur Betätigungsvorrichtung hin an mindestens zwei Dichtstellen, an denen sich relativ zueinander Bauteile bewegen, eine Dichtfunktion gewährleistet sein muß. Dies betrifft einerseits die in dem entsprechenden Gehäuse verschieblich beziehungsweise drehbeweglich gelagerte Voreinstellhülse oder dergleichen und andererseits die Ventilstange, die die Voreinstellhülse durchgreift und in diesem Durchgriffsbereich abgedichtet sein muß.

Ausgehend von diesem Stand der Technik liegt der Erfindung die Aufgabe zugrunde, ein Einbauventil gattungsgemäßer Art zu schaffen, welches eine hohe Funktionssicherheit aufweist und hinsichtlich der Herstellung vereinfacht ist.

Zur Lösung dieser Aufgabe wird vorgeschlagen, dass ein im Gehäuse drehbar und axial verschiebliches Stellteil zum Voreinstellen der Durchflußmenge integral mit dem das Verschlußstück halternden Teil ausgebildet ist und das Stellteil unabhängig vom Regelteil, das jeder Drehbewegung des Stellteiles folgt, zu diesem hin und von diesem weg axial verschiebbar ist.

Durch diese Ausbildung ist erreicht, daß die bisher notwendige Durchgriffsstelle für das, das Ventilverschlußstück halternde Teil, beispielsweise die Ventilstange durch die Voreinstellvorrichtung vermieden ist, so daß in diesem Bereich keine zusätzliche Abdichtung erforderlich ist und auch keine mögliche Leckagestelle gebildet ist. Es ist nämlich das entsprechende Detail der Voreinstellvorrichtung einteilig ausgebildet, wobei dieses Teil das Stellteil umfaßt, welches einstückig mit dem das Ventilverschlußstück halternden Teil, beispielsweise der Ventilstange, ausgebildet ist, so daß nur dieses Teil radial außen gegenüber dem umgebenden Gehäuse abgedichtet sein muß. Zusätzlich ist das Regelteil vorgesehen, welches mittels des Stellteiles drehbar ist, wobei jedoch das Stellteil funktionsgerecht zum Regelteil hin und von diesem weg axial verschiebbar ist, sofern die anzuschließende Betätigungsvorrichtung (Thermostat oder Stellantrieb) auf das Stellteil einwirkt.

Die Trennung der Voreinstellvorrichtung in ein Stellteil und ein Regelteil ist an sich aus der DE 44 07 447 C2 oder der DE 195 45 715 A1 bekannt. Im Unterschied dazu ist jedoch bei der Erfindung das Stellteil zum Regelteil zusätzlich zur drehbaren gekoppelten Verbindung auch axial verschiebbar. Die axiale Verschiebbarkeit entspricht der von der Betätigungseinrichtung übertragenen Hubbewegung.

Bevorzugt ist vorgesehen, daß das Stellteil hülsenartig ausgebildet und in einer Bohrung des Gehäuses unverlierbar sowie gegenüber dem umgebenden Mantel der Bohrung abgedichtet in Achsrichtung der Bohrung verschieblich gehalten ist, wobei das Stellteil an seinem dem Ventilverschlußstück abgewandten Ende durch ein integrales Wandungsteil verschlossen ist, von dem das Teil beziehungsweise die Ventilstange abragt und das gegebenenfalls auf der dem Teil beziehungsweise der Ventilstange abgewandten Seite ein stößelartiger Ansatz abragt, auf den eine Betätigungsvorrichtung, beispielsweise ein Thermostat oder ein Stellantrieb, einwirkt.

Zudem ist bevorzugt vorgesehen, daß die Ventilstange das Regelteil an einer Bohrung durchgreift, wobei das Regelteil aus einer die Bohrung aufweisenden Scheibe und einem von dieser in Richtung zum Ventilsitz oder Ventilverschlußstück abragenden Kragen besteht, der mindestens eine Durchflußöffnung aufweist, wobei der Kragen von Wandungsteilen des Gehäuses eng umgeben ist und die Wandungsteile eine Durchflußöffnung aufweisen.

Um die notwendige Hubbewegung zwischen Regelteil und Stellteil zu realisieren, ist bevorzugt vorgesehen, daß das Regelteil und das Stellteil an ihren einander zugewandten Stirnseiten ineinandergreifende Vorsprünge und Vertiefungen aufweisen, deren Länge in axialer Verschieberichtung des Stellteiles zum Regelteil dem maximalen Verschiebeweg entsprechen.

Zudem ist bevorzugt vorgesehen, daß zwischen dem Stellteil und dem Regelteil eine Rückstellfeder der Rückstellfederanordnung eingespannt ist.

In an sich bekannter Weise ist vorgesehen, daß die Rückstellfeder als Schraubenfeder ausgebildet und von der Ventilstange durchgriffen ist.

Zudem kann vorgesehen sein, daß der Ventilsitz am Ende des Gehäuses gehaltert oder an diesem ausgebildet ist.

Auch kann vorgesehen sein, daß das aus dem Gehäuse am dem Ventilsitz abgewandten Ende vorragende Ende des Stellteiles Werkzeugangriffskonturen für ein die Drehung bewirkendes Werkzeug aufweist.

Ein Ausführungsbeispiel der Erfindung ist in der Zeichnung dargestellt und im folgenden näher beschrieben.

### Es zeigt:

- Figur 1: ein Einbauventil mit daran befestigter Betätigungsvorrichtung im Längsschnittgesehen;
- Figur 2: eine Einzelheit der Figur 1 in vergrößerter Darstellung,
- Figur 3: die Einzelheit gemäß Figur 2 im Schnitt III/III der Figur 2 gesehen.

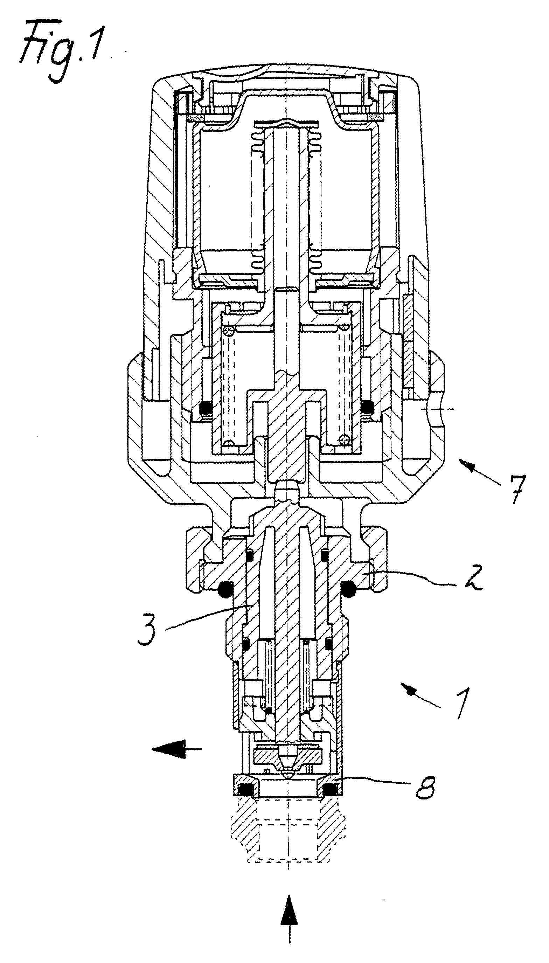

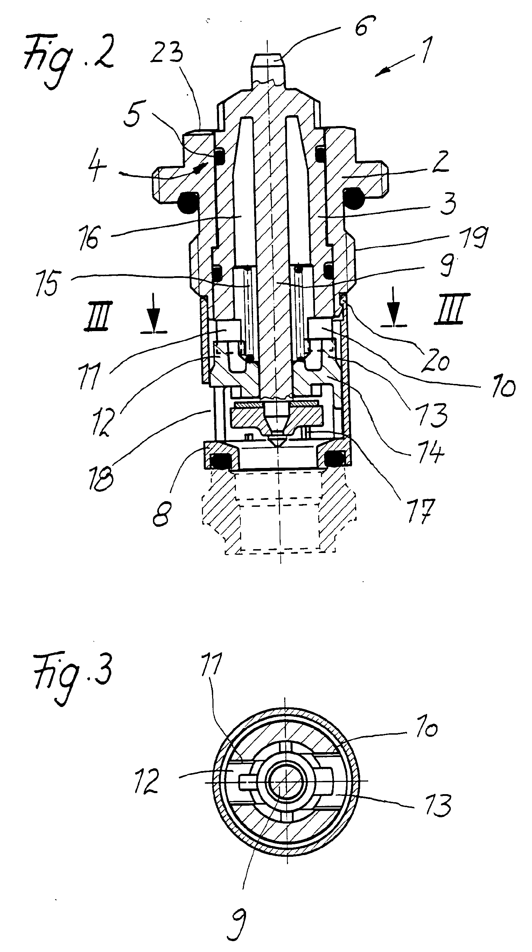

In der Zeichnung ist ein voreinstellbares Einbauventil 1 gezeigt, welches beispielsweise für Warmwasserheizkörper bestimmt ist. Das Einbauventil 1 ist mit einer Betätigungseinrichtung 7 (im Ausführungsbeispiel mit einen Thermostatkopf) gekoppelt. Das Einbauventil 1 weist ein Gehäuse 2 auf, welches ein axial und um die Längsachse drehbares Stellteil 3 nach Art einer Voreinstellungshülse aufweist, das im wesentlichen als hülsenförmiger Hohlkörper ausgebildet ist, und das, wie insbesondere auch aus Figur 2 ersichtlich ist, an seiner Außenumfangsfläche mindestens einen Aufnahmebereich 4, beispielsweise eine umlaufende Nut, für ein Dichtelement 5 (beispielsweise einen Dichtring) aufweist. Im Ausführungsbeispiel sind zwei solcher Aufnahmebereiche 4 und Dichtringe 5 vorgesehen. An dem Stellteil 3 ist ein stößelförmiger Ansatz 6 an dem Ende angeordnet, welches von der Betätigungseinrichtung 7 übergriffen ist. Gegenüber dem stößelförmigen Ansatz 6 ist an der zu einem Ventilsitz 8 hinweisenden Seite das Stellteil 3 nach Art einer Ventilstange 9 ausgebildet, an deren in der Zeichnung unteren Ende das Ventilverschlußstück fixiert ist.

Am in der Zeichnung unteren, zum Ventilsitz 8 weisenden Ende des Stellteiles 3 sind Ausnehmungen 10, 11 eingebracht, in die entsprechende Stege 12, 13 eines Regelteiles 14 eingreifen. Sowohl die Stege 12,13 als auch die Ausnehmungen 10,11 sind hierbei so ausgebildet, daß bei vollständiger Hubbewegung des Stellteiles 3 die Stege in die Ausnehmungen eintauchen können. Gleichzeitig stützt sich das Regelteil 14 durch eine Rückstellfeder 15, die sich einerseits am Regelteil 14 und andererseits an einer inneren Verrippung 16 des Stellteiles 3 abstützt, am Ventilsitz 8 ab. Das Stellteil 3 weist an seinem oberen, aus dem Gehäuse 2 herausragenden Ende radial Werkzeugsangriffsflächen oder dergleichen auf, so daß das Stellteil einfach gedreht werden kann. Durch Drehen des Stellteiles 3 wird in an sich bekannter Weise das Regelteil 14 über die in Eingriff befindlichen Ausnehmungen 10,11 und Stege 12, 13 mitgenommen, wobei das Regelteil 14 Regelquerschnitte 17 (Öffnungen unterschiedlicher Größe) aufweist, die in Abhängigkeit von der Drehposition des Regelteils 14 vor ein am offenen Fenster 18 des Gehäuses 2 positioniert werden können, so daß der Durchfluß hierdurch unterschiedlich einstellbar ist.

Am Gehäuse 2 ist ein Einschraubgewinde 19 in üblicher Weise vorgesehen, so daß das Einbauventil 1 in eine entsprechende Gewindekontur eines Heizkörpers oder dergleichen eingeschraubt werden kann.

Insgesamt ist das Gehäuse 2 etwa rohrförmig ausgebildet, wobei am unteren Ende des rohrförmigen Gehäuses 2 der Ventilsitz 8 ausgebildet oder angeordnet ist, während am oberen Ende des rohrförmigen Gehäuses 2 das Ende des Stellteiles 3 mit dem stößelartigen Ansatz 6 vorragt.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Voreinstellbares Einbauventil (1), insbesondere für Warmwasserheizkörper, mit einem Gehäuse (2), mit einem Teil, insbesondere einer Ventilstange (9), zur Halterung eines mit einem Ventilsitz (8) zusammenwirkenden Ventilverschlußstücks, mit einer Vorrichtung zum Voreinstellen der Durchflußmenge,
**dadurch gekennzeichnet, dass** ein im Gehäuse (2) drehbar und axial verschiebliches Stellteil (3) zum Voreinstellen der Durchflußmenge integral mit dem das Verschlußstück halternden Teil (9) ausgebildet ist und das Stellteil (3) unabhängig vom Regelteil (14), das jeder Drehbewegung des Stellteiles (3) folgt, zu diesem hin und von diesem weg axial verschiebbar ist.

2. Einbauventil nach Anspruch 1,
**dadurch gekennzeichnet, dass** das Stellteil (3) hülsenartig ausgebildet und in einer Bohrung des Gehäuses (2) unverlierbar sowie gegenüber dem umgebenden Mantel der Bohrung abgedichtet in Achsrichtung der Bohrung verschieblich gehalten ist, wobei das Stellteil (3) an seinem dem Ventilverschlußstück abgewandten Ende durch ein integrales Wandungsteil verschlossen ist, von dem das Teil (9) beziehungsweise die Ventilstange abragt und das gegebenenfalls auf der dem Teil (9) beziehungsweise der Ventilstange abgewandten Seite ein stößelartiger Ansatz (6) abragt, auf den eine Betätigungsvorrichtung (7), beispielsweise ein Thermostat oder ein Stellantrieb, einwirkt.

3. Einbauventil nach Anspruch 1 oder 2,
**dadurch gekennzeichnet, dass** die Ventilstange (9) das Regelteil (14) an einer Bohrung durchgreift, wobei das Regelteil (14) aus einer die Bohrung aufweisenden Scheibe und einem von dieser in Richtung zum Ventilsitz (8) oder Ventilverschlußstück abragenden Kragen besteht, der mindestens eine Durchflußöffnung (17) aufweist, wobei der Kragen von Wandungsteilen des Gehäuses (2) eng umgeben ist und die Wandungsteile eine Durchflußöffnung (18) aufweisen.

4. Einbauventil nach einem der Ansprüche 1 bis 3,
**dadurch gekennzeichnet, dass** das Regelteil (14) und das Stellteil (3) an ihren einander zugewandten Stirnseiten ineinandergreifende Vorsprünge (12,13) und Vertiefungen (10,11) aufweisen, deren Länge in axialer Verschieberichtung des Stellteiles (3) zum Regelteil (14) dem maximalen Verschiebeweg entsprechen.

5. Einbauventil nach einem der Ansprüche 1 bis 4,
**dadurch gekennzeichnet, dass** zwischen dem Stellteil (3) und dem Regelteil (14) eine Rückstellfeder (15) der Rückstellfederanordnung eingespannt ist.

6. Einbauventil nach Anspruch 5,
**dadurch gekennzeichnet, dass** die Rückstellfeder (15) als Schraubenfeder ausgebildet und von der Ventilstange (9) durchgriffen ist.

7. Einbauventil nach einem der Ansprüche 1 bis 6,
**dadurch gekennzeichnet, dass** der Ventilsitz (8) am Ende des Gehäuses (2) gehaltert oder an diesem ausgebildet ist.

8. Einbauventil nach einem der Ansprüche 1 bis 7,
**dadurch gekennzeichnet, dass** das aus dem Gehäuse (2) am dem Ventilsitz abgewandten Ende vorragende Ende des Stellteiles (3) Werkzeugangriffskonturen für ein die Drehung bewirkendes Werkzeug aufweist.
